# EUROPÄISCHE PATENTSCHRIFT

(11) **EP 0 523 143 B1**
(45) Veröffentlichungstag und Bekanntmachung des Hinweises auf die Patenterteilung: **14.09.1994**
(21) Anmeldenummer: 91907538.2
(22) Anmeldetag: 03.04.1991
(51) Int. Cl.: F16H 37/04, B60K 17/344

(54) **GETRIEBE**
GEARING
TRANSMISSION

(30) Priorität: 05.04.1990 DE 4011030
(43) Veröffentlichungstag der Anmeldung: 20.01.1993
(73) Patentinhaber: ZF FRIEDRICHSHAFEN Aktiengesellschaft, 88038 Friedrichshafen (DE)
(72) Erfinder: HÄRDTLE, Willy, D-7778 Markdorf (DE); HERLITZEK, Werner, D-7990 Friedrichshafen (DE); SCHOBINGER, Alfred, D-7990 Friedrichshafen (DE)
(86) Internationale Anmeldenummer: EP9100633
(87) Internationale Veröffentlichungsnummer: WO9115688

(56) Entgegenhaltungen:
- EP-A- 91 406
- WO-A-83/01928
- DE-A- 2 529 248
- FR-A- 2 613 015
- US-A- 4 635 744
- US-A- 4 716 786

## Beschreibung

Die Erfindung betrifft ein Getriebe nach dem Oberbegriff des Anspruches 1 wie es aus der US-A 46 35 744 bekannt ist. Getriebe ähnlicher Art, die unter anderem als Lastschaltwendegetriebe für schwere Baumaschinen usw. verwendet werden, sind durch die DE-A1 25 29 248 bekannt. Dabei wird ein einziges außenverzahntes Stirnrad auf einer Abtriebswelle, welche über im Getriebegehäuse befindliche Lager auf beiden Seiten abgestützt wird, von einem Zahnrad auf einer vorgeschalteten Zwischenwelle angetrieben. In der Regel besitzt die Abtriebswelle an beiden Enden Anschlußflansche außerhalb des eigentlichen Getriebegehäuses, welche ihrerseits z. B. die Vorder- und Hinterachsantriebe eines Fahrzeuges treiben. Um möglichst vielen Einbauverhältnissen gerecht zu werden, darf der Abstand zwischen den Anschlußflanschen und der Abstand zwischen diesen und dem Stirnzahnrad nur gering sein.

Bei der Verwendung dieser Getriebe unter extremen Verhältnissen, z. B. mit Sonderfahrzeugen an großen Steigungen bzw. schlechten Bodenbeschaffenheiten oder bei schwierigen Transporten, zeigte sich ein Bedarf an einer zusätzlichen Untersetzungsstufe, z. B. einem Kriechgang.

Die Aufgabe der Erfindung wird darin gesehen, bei einem Getriebe der eingangs geschilderten Art eine zusätzliche Abschaltmöglichkeit vorzusehen, ohne den Bedarf an Einbauraum nennenswert zu vergrößern.

Die Lösung dieser Aufgabe wird mit den kennzeichnenden Merkmalen des Anspruches 1 erreicht.

Da die Abtriebswelle axial vor der drehfest aufgezogenen Stegflanschnabe eine Abschaltkupplung mit einer mit einem Führungszapfen in die Abtriebswelle konzentrisch eingeschobenen Wellenverlängerung hat, die aus je einer gleich großen Mitnehmerverzahnung auf beiden freien Enden der Abtriebswelle und der Wellenverlängerung und einer darauf axial verschieblichen Schiebemuffe besteht, wobei die Wellenverlängerung auf der kupplungsabgewandten Seite des Hohlrades von einem eigenen Wälzlager in einem die Abschaltkupplung axial übergreifenden deckelförmigen Lagergehäuse gehaltert ist, dessen Flanschbund die äußere Axialfixierung des Außenringes des zugehörigen Hohlradnabenlagers bildet, besteht somit die Möglichkeit, die Getriebeendstufe ohne Beeinträchtigung des Planetengetriebes mit einer nachrüstbaren Abschaltmöglichkeit für die triebliche Abtrennbarkeit eines der Wellenenden, z. B. für Schnellfahrten, vorzusehen.

Der hierzu benötigte axiale Freiraum ist praktisch gleich groß gegenüber der bisher für das einfache Stirnrad erforderlich gewesenen Breite. Günstig ist auch die mit der nahezu vollständigen Umhüllung des Planetengetriebes durch die Außenwände des Hohlrades und durch die Abtauchung im Getriebesumpf erzielte hohe Geräuschdämmung und günstige Wärmeabfuhr an das Öl. Die Möglichkeit, die Schiebemuffen-Schaltbetätigung für dieses Planetengetriebe auf gleicher Drehachse anzuordnen wie die ebenfalls vorgesehene Achsabschaltvorrichtung, erleichtert die ergonomisch günstige Anordnung der Bedienungselemente für beide Kupplungen. Weitere Vorteile ergeben sich aus den besondere Ausgestaltungsmaßnahmen beschreibenden Unteransprüchen.

Mit einer als Klauenkupplung gestalteten Kupplung, bei der die Schiebemuffe mit einer Kupplungsverzahnung an einem Gehäusekragen und mit einer Kupplungsverzahnung an der Sonnenradhohlwelle zusammenwirkt, kann zwischen beiden Schaltstellungen eine Neutralstellung vorgesehen werden.

Dadurch, daß sowohl die kupplungsseitige Nabe des einen Stegflansches als auch dessen auf der Abtriebswelle drehfest gehalterte kupplungsabgewandte Nabe entsprechend großen Naben beidseits des Hohlrades als Laufflächen bzw. Lager dienen, während die Naben des Hohlrades ihrerseits von in Gehäusewänden abgestützten Wälzlagern außen umfaßt sind, wird eine unmittelbare Krafteinleitung des Getriebes in das Gehäuse ohne lange, Biegekräfte verursachende Abstände erreicht.

Dadurch, daß sich mindestens das kupplungsseitige, der die Hohlradnaben außen umfassenden Wälzlager in einem Gehäusesteg befindet, der mit einem die Schiebemuffen und die Kupplung axial überkragenden Lagergehäusedeckel gehalten ist, der eine etwa radial über dem zugeordneten Hohlradnaben-Wälzlager befindliche Flanschebene am Gehäuse abdichtet und eine ausreichend große lichte Öffnung zum seitlichen Einsetzen des Stirnzahnrades aufweist, wird das fakultative Auswechseln bzw. Nachrüsten des Stirnrades gegen ein im Durchmesser gleich großes Stirnrad mit innerem Planetengetriebe ermöglicht, ohne daß dazu über dem Stirnrad befindliche Wellen oder Zahnräder usw. demontiert werden müßten.

Dadurch, daß die Kupplung in einem der Lagergehäusedeckel vorgesehen wird, ergibt sich eine besonders einfache Nachrüstbarkeit bzw. Austauschbarkeit.

Dadurch, daß die Sonnenradwelle gegenüber dem auf der Abtriebswelle gehalterten kupplungsabgewandten Stegflansch und gegenüber einem ihrer Kupplungsverzahnung axial vorgeordneten Ringbund auf der Abtriebswelle durch Anlaufscheiben axial fixiert ist, kann ohne weiteren Platzbedarf in axialer Richtung vermieden werden, daß z. B. durch Schaltkräfte an der Schiebemuffe das Hohlrad gegenüber dem seinen Außenzahnkranz antreibenden Antriebsrad aus der Flucht geschoben wird.

Dadurch, daß die Sonnenradhohlwelle an ihrem freien Ende mittels eines Nadellagers gegen die Abtriebswelle reibungsgünstig abgestützt ist, kann im Zusammenwirken mit den ebenfalls nadelgelagerten Planetenbolzen ein günstiger Wirkungsgrad der Getriebeendstufe erreicht werden.

Dadurch, daß die Abtriebswelle mit einer an ein Druckölversorgungssystem angeschlossenen Zentralbohrung versehen ist, aus welcher Radialkanäle zumindest zu den Lagern der Hohlradnaben und der Planetenräder führen, ist die zuverlässige Schmierung auch der normaler Spritzölkühlung weniger zugänglichen inneren Schmierstellen zuverlässig sichergestellt.

Dadurch, daß der untere Bereich des Stirnzahnrades von einer bis etwa zur Mitte der Abtriebswelle hochreichenden eigenen Ölwanne eng umgeben ist und zumindestens die eine Stirnwand des Hohlrades mit mehreren Axialbohrungen im Bereich der Hohlradinnenverzahnung versehen ist, wird ein intensiver radialer Öldurchfluß durch das Planetengetriebe weiter sichergestellt.

Durch die Verwendung eines Rollenlagers auf der einen Hohlradnabe und eines Kugellagers auf der anderen Hohlradnabe lassen sich auch Wärmedehnungen im Bereich des Planetengetriebes ohne unzulässige Klemmwirkungen bewältigen.

Beschädigungsgefahren für das Getriebe beim Umschalten sind mit einem Ansteuerungssystem vermeidbar, das z. B. Schaltungen der Getriebeendstufe nur im Stillstand bzw. bei Motordrosselung gestattet.

Die Erfindung ist nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung. So ist es beispielsweise denkbar, das Stirnzahnrad auch als Riemenscheibe oder Kettentrieb auszugestalten.

Die Erfindung ist anhand eines Ausführungsbeispieles in der Zeichnung schematisch dargestellt.
- Fig. 1: zeigt ein erfindungsgemäßes Getriebe in der Anwendung als Verteilergetriebe für ein Fahrzeug mit Vorder- und Hinterradantrieb bei eingeschaltetem Kriechgang und zugeschaltetem Vorderachsantrieb.
- Fig. 2: zeigt die untere Hälfte des gleichen Getriebes mit abgeschaltetem Kriechgang und abgeschaltetem Vorderachsantrieb.

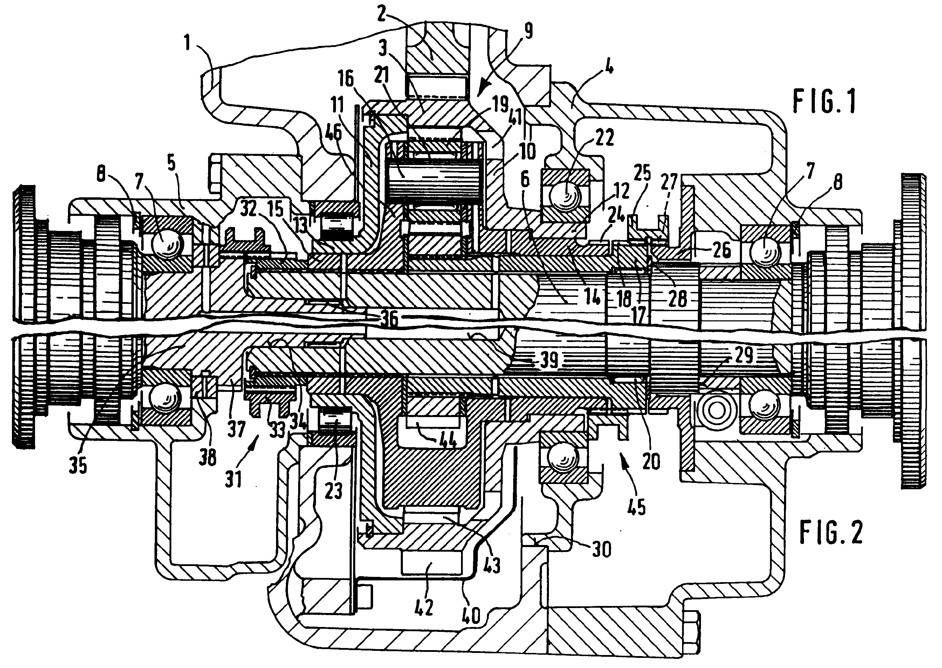

In Fig. 1 umschließt das Getriebegehäuse 1 in seinem unteren Bereich ein vorgeschaltetes Zahnrad 2 und ein Stirnzahnrad 3 der Getriebeendstufe. In je einem deckelartigen Lagergehäuse 4, 5 ist die vom Zahnrad 2 über das Stirnzahnrad 3 angetriebene Antriebswelle 6 in Lagern 7 radial abgestützt und axial fixiert durch Sicherungsringe 8 auf der Außenseite der Außenringe der Lager 7 in der Innenwand des jeweiligen Lagergehäuses 4 bzw. 5. Eine Achsabschaltkupplung 31 für den Vorderradantrieb liegt links vom Sonnenrad 44. Eine Kupplung 45 zum Zu- oder Abschalten des Getriebes 1 liegt im Bild rechts vom Sonnenrad 44.

Das Stirnzahnrad 3 verfügt hier über je einen außen- und innenverzahnten Zahnkranz 42, 43 und bildet ein Hohlrad mit zwei ein Planetengetriebe 9 radial stirnseitig überdeckenden Hohlradstegen 10, 11, von deren Innendurchmesser Naben 12, 13 in Achsrichtung nach außen hervorkragen. Beide Naben 12, 13 sind drehbar geführt auf jeweils einer Stegnabe 14, 15, welche dem Planetenträger 46 der Planetenbolzen 16 beidseits angeformt sind. Davon ist die in der Zeichnung links dargestellte Stegnabe 15 auf die Antriebswelle 6 drehfest auf eine Keilverzahnung aufgeschoben, während die andere Stegnabe 14 auf einer von ihr umschlossenen Sonnenrad-Hohlwelle 17 drehbar gelagert ist. Auf ihrem unter der Hohlradnabe 12 axial hervorkragenden freien Ende hat die Stegnabe 14 eine Kupplungs-Mitnahmeverzahnung 24. Die Sonnenradwelle 17 ist einerseits über die mit dem Sonnenrad 44 kämmenden Planetenräder 19 gegen die Innenverzahnung des als Hohlrad dienenden Stirnzahnrades 3 und andererseits über ein Nadellager 20 radial unter der Kupplungsverzahnung 18 zur Abtriebswelle 6 drehbar gelagert. Die Planetenräder 19 sind vorzugsweise ebenfalls mit Nadellagern 21 auf den Planetenbolzen geführt. Die Hohlradnaben 12, 13 sind durch Wälzlager 22, 23 gegenüber dem Getriebegehäuse 1 bzw. Zwischenwänden desselben radial abgestützt. Dabei ist das kupplungszugewandte Lager 22 vorzugsweise ein Kugellager, während das kupplungsabgewandte Lager 23 vorzugsweise ein Rollenlager ist. Die Sonnenradwelle 17 hat unmittelbar axial vor der Kupplungsverzahnung 18 der Stegradnabe 14 eine entsprechende axiale Kupplungsverzahnung 24, in der Länge einer auf ihr verschieblichen Schiebemuffe 25, und ihr ist auf einem vom Gehäuse 4 her gegen sie nach innen vorkragenden Gehäusekragen 26 eine ebenfalls entsprechende, gehäusefeste Kupplungsmitnahmeverzahnung 27 zugeordnet. Axial zwischen der Sonnenradweile 17 bzw. deren Nadellager 20 und einem der Abtriebswelle 6 vor dem kupplungsseitigen Lager 7 angeformten Ringbund 29 befindet sich eine Anlaufscheibe 28. Ist die lichte Öffnung 30 des kupplungsseitigen Lagergehäuses 4 im Getriebegehäuse 1 ausreichend groß, kann das Stirnzahnrad 3 samt mindestens einer zugehörigen Nabe 10 von der Seite her in das Getriebe 1 eingebaut werden.

Ist das hier beschriebene Getriebe 1 ein Verteilergetriebe mit abschaltbarem Vorderachsantrieb, so kann, wie im Beispiel gezeigt, die Abtriebswelle 6 innerhalb der Lager 7 noch unterteilt und eine Axialabschaltung 31 der drehfesten Stegnabe 15 außen vorgeordnet sein. Dazu hat die Abtriebswelle 6 axial vor der drehfest auf ihr aufgezogenen Stegflanschnabe 15 einen ebenfalls in die vorhandene und nur entsprechend verlängerte Keilverzahnung eingreifend, einen Mitnehmerzahnkranz 32 mit der Breite einer weiteren Schiebemuffe 33 und etwa radial darunter eine Innenlagerbohrung 34, in welcher ein entsprechender Einsteckzapfen der außen vorgeordneten Wellenverlängerung 35 paßt und dort ein Nadellager 36 aufweist. Die Wellenverlängerung 35 ist mit einem an die Stirnseite der Abtriebswelle 6 heranreichenden Außenbund 37 versehen, der eine mit der Schiebemuffe 33 in Eingriff bringbare drehfeste Mitnahmeverzahnung aufweist. Axial zwischen dem Außenbund 37 der Wellenverlängerung 35 und dem zugeordneten Lager 7 ist eine Ölzufuhrbuchse 38 mit radialem Kanal zu einer inneren Zentralbohrung 39 aus der Wellenverlängerung 35 in die eigentliche Abtriebswelle 6 führend vorgesehen. Davon gehen diverse radiale Stichkanäle speziell zu den Gleit- oder Wälzlagern bei 12, 14 und 13, 15 sowie bei 16 und zu den Planetenrädern 19 ab.
Eine das Stirnzahnrad 3 in seinem unteren Bereich eng umschließende eigene Ölwanne 40 und Axialbohrungen 41 auf der Höhe der Innenverzahnung durch die Hohlradstege sorgen dafür, daß jederzeit eine ausreichende Versorgung der Zahnkränze und Lager mit Öl sichergestellt ist.

Die Schiebemuffe 25 für die Getriebeendstufe ergibt in der Position nach Fig. 1 eine Arretierung der Sonnenradhohlwelle 17 am Gehäuse 1 bzw. 4, so daß das Hohlrad 3 über die Planetenräder 19 und die Planetenbolzen 16 die Stegradnabe 15 bzw. die Welle 6, 35 stark untersetzt antreibt.

Fig. 2 zeigt dazu im Unterschied die Schiebemuffe 25 für die Kupplung 45 nur im Eingriff mit der Sonnenradhohlwelle 17 und außer Eingriff mit dem Ringbund 26, so daß keine Blockierung des Planetengetriebes 9 und damit auch keine Untersetzung zustande kommt. Vielmehr wirkt dann das bei praktisch gleichem axialen Bauraum auch als Planetengetriebehohlrad dienende Stirnzahnrad 3 nur als einfaches Zahnrad, das über die Planetenräder 19 die zum Stegflansch 15 blockierte Sonnenradwelle 17 die Abtriebswelle 6 unübersetzt antreibt.

Ein nicht gezeichnetes, an sich beliebiges Ansteuerungssystem kann Getriebeschäden infolge unzulässiger Beanspruchungen bei zugeschalteter Untersetzungsstufe dadurch vermeiden, daß es eine Umschaltung nur bei Fahrzeugstillstand und bei eingelegten unteren Gängen bzw. vorgegebener Motordrosselung ermöglicht.

Die Achsabschaltkupplung 31 kann unabhängig von der Kriechgangkupplung 45 betätigt werden. Mit den aufgezeigten Mitteln ist es gelungen, in ein an sich beliebiges vielseitig verwendbares Mehrstufengetriebe mit zusätzlicher Untersetzungsstufe derart zu verbessern, daß gegenüber dem Bekannten ein stark erweiterter Einsatzbereich ohne wesentliche Gehäuseänderungen bei gleichem Platzbedarf und notfalls auch nachrüstbar geschaffen werden kann.

## Patentansprüche

1. Getriebe mit einer Abtriebswelle (6), insbesondere für Baumaschinen, die in gegenüberliegenden Gehäusewänden gelagert ist und über ein einziges, außenverzahntes Stirnzahnrad (3) mit einem Zahnrad (2) auf einer vorgeschalteten Zwischenwelle trieblich verbunden ist,
- wobei das Stirnzahnrad (3) zusätzlich zu seiner Außenverzahnung (42) eine Innenverzahnung (43) aufweist,
- in welcher Planetenräder (19) kämmen,
die sowohl mit dem Stirnzahnrad (3) als auch einem Sonnenrad (44) kämmen,
- und daß eine das Sonnenrad (44) tragende Hohlwelle (17) über eine Kupplung (45) in einer ersten Schaltstellung mit dem Gehäuse (1) und in einer zweiten Schaltstellung mit einem Planetenträger (46) der Planetenräder (19) verbindbar ist,
- wobei der Planetenträger (46) mit der Abtriebswelle (6) drehfest verbunden ist, dadurch
**gekennzeichnet,**
- daß die Abtriebswelle (6) axial vor einer drehfest auf ihr aufgezogenen Stegflanschnabe (15) eine Abschaltkupplung (31) zu einer einen Führungszapfen aufweisenden Wellenverlängerung (35) aufweist,
- welche in eine ihr zugewandte Innenlagerbohrung (34) der Abtriebswelle (6) mit dem Führungszapfen eingesteckt ist,
- und wobei die Abschaltkupplung (31) aus je einer gleich großen Mitnahmeverzahnung auf den freien Enden der Abtriebswelle (6) und der Wellenverlängerung (35) sowie einer auf diese Nitnahmeverzahnungen axial verschieblichen Schiebemuffe (33) besteht,
- wobei die Wellenverlängerung (35) von einem eigenen Wälzlager (7) geführt ist, das in einem die Abschaltkupplung (31) axial übergreifenden Gehäuseseitendeckel (5) gehalten ist,
- dessen Flanschbund die äußere Axialfixierung eines Außenringes eines zugewandten Hohlradnabenlagers (23) bildet.

2. Getriebe nach Anspruch 1, dadurch
**gekennzeichnet,**
- daß die Kupplung (45) eine Klauenkupplung mit einer Schiebemuffe (25) ist,
- deren Mitnahmeverzahnung mit einer Kupplungsverzahnung (27) an einem Gehäusekragen (26) und mit einer Kupplungsverzahnung (18) an der Sonnenradhohlwelle (17) zusammenwirkt, und
- daß die Schiebemuffe (25) zwischen den beiden Schaltstellungen eine Neutralstellung einnimmt.

3. Getriebe nach Anspruch 1, dadurch
**gekennzeichnet,**
- daß die Abtriebswelle (6) in Lagergehäusen (4, 5) gelagert ist,
- die mit dem Gehäuse (1) lösbar verbunden sind und Öffnungen im Gehäuse (1) abdecken, von denen mindestens eine die Montage der vormontierten Abtriebswelle (6) zuläßt.

4. Getriebe nach Anspruch 3, dadurch
**gekennzeichnet,** daß die Kupplung (45) in einem der beiden Lagergehäuse (4, 5) angeordnet ist.

5. Getriebe nach Anspruch 1, dadurch
**gekennzeichnet,** daß die Sonnenradhohlwelle (17) gegenüber dem auf der Abtriebswelle (6) gehalterten kupplungsabgewandten Stegflansch (14) und gegenüber einem ihrer Kupplungsverzahnung (18) axial vorgeordneten Ringbund (29) auf der Abtriebswelle (6) durch Anlaufscheiben (28) axial fixiert ist.

6. Getriebe nach Anspruch 1, dadurch
**gekennzeichnet,** daß die Sonnenradhohlwelle (17) an ihrem freien Ende mittels eines Nadellagers (20) gegen die Abtriebswelle (6) abgestützt ist.

7. Getriebe nach Anspruch 1, dadurch
**gekennzeichnet,**
- daß die Abtriebswelle (6) eine an ein Druckölversorgungssystem angeschlossene Zentralbohrung (39) aufweist,
- aus welcher Radialkanäle zumindestens zu den Lagern der Hohlradnaben (12, 13) und zu den Planetenradlagern (21) führen.

8. Getriebe nach Anspruch 1, dadurch
**gekennzeichnet,**
- daß der untere Bereich des Stirnzahnrades (3) von einer bis etwa zur Mitte der Abtriebswelle (6) hochreichenden eigenen Ölwanne (40) eng umgeben ist
- und daß zumindestens ein Hohlradträgersteg (10) mit mehreren Axialbohrungen (41) versehen ist.

9. Getriebe nach Anspruch 1, dadurch
**gekennzeichnet,** daß das der Kupplung (45) zugewandte Lager (22) der Hohlradnabe (12) gegenüber dem Gehäuse (1) ein Kugellager (22) und das der Kupplung (45) abgewandte Lager (23) der Hohlradnabe (13) gegenüber dem Gehäuse (1) ein Rollenlager ist.

10. Getriebe nach Anspruch 1, dadurch
**gekennzeichnet,**
- daß ein Ansteuerungssystem für die Betätigung der Kupplung (45) vorhanden ist,
- welches deren Umschaltung nur bei Fahrzeugstillstand ermöglicht
- und welches deren Umschaltung nur in den unteren Gängen des Fahrzeuggetriebes bzw. bei einer vorgegebenen Motordrosselung ermöglicht.

## Claims

1. A transmission with an output shaft (6), in particular for construction machinery, mounted in opposing housing walls and located in a driving connection with a gear (2) on an input end intermediate shaft through a single spur gear (3) with external gearing,
- whereby the spur gear (3) has internal gearing (43) in addition to its external gearing (42),
- with which planet gears (19) mesh,
whereby these planet gears mesh both with the spur gear (3) and a sun gear (44),
- a quill shaft (17) upon which the sun gear (44) is mounted can be connected to the housing (1) via a clutch (45) in the first shift position, and to a planetary carrier (46) via the clutch (45) in a second shift position,
- whereby the planetary carrier (46) is fixedly connected to the output shaft (6),
**characterized** in that,
- the output shaft (6) has cut-off coupling linked to a shaft extension (35) incorporating a guide journal which is located in an axial arrangement in front of a bridge web hub (15) which is placed over it, thus forming a fixed connection,
- whereby the guide journal of the shaft extension (35) is inserted into an internal bearing bore (34) in the output shaft (6) facing the shaft extension (35),
- and whereby the cut-off coupling (31) consists of equally dimensioned engagement gearing on the free ends of the output shaft (6) and shaft extension (35), and of a sliding sleeve (33) mounted on this engagement gearing so as to enable it to move axially,
- whereby the shaft extension (35) is mounted in its own roller bearing (7) which is in turn mounted in one of the side housing covers (5) surrounding the axis of the cut-off coupling (31),
- the flange collar of the side housing cover (5) forms the outer axial mounting of an outer ring of a quill shaft hub bearing (23) which faces it.

2. Transmission in accordance with Claim 1,
**characterized** in that,
- the clutch (45) is a dog clutch with a sliding sleeve (25),
- the engagement gearing of the clutch (45) acts in conjunction with a clutch gearing profile (27) on the housing collar (26) and with a clutch gearing profile (18) on the sun gear quill shaft (17), and
- the sliding sleeve (25) adopts a neutral position between the two shift positions.

3. Transmission in accordance with Claim 1,
**characterized** in that,
- the output shaft (6) is mounted in bearing casings (4, 5),
- the bearing casings (4, 5) are located in a separable connection and cover openings in the housing (1), of which at least one permits the pre-assembled output shaft (6) to be fitted.

4. Transmission in accordance with Claim 3,
**characterized** in that, the clutch (45) is fitted in one of the two bearing casings (4, 5).

5. Transmission in accordance with Claim 1,
**characterized** in that, the sun gear quill shaft (17) is axially fixed on the output shaft (6) using thrust washers and is fixed on one side against the bridge web (14) which faces away from the clutch and is held on the output shaft (6), and on the other side, against a ring collar (29) located axially in front of the clutch gearing profile (18) of the sun gear quill shaft (17).

6. Transmission in accordance with Claim 1,
**characterized** in that, the free end of the sun gear quill shaft (17) is supported against the output shaft (6) by means of a needle bearing (20).

7. Transmission in accordance with Claim 1,
**characterized** in that,
- the output shaft (6) has a central bore (39) connected to a pressurized oil supply system,
- radial ducts run from the central bore (39) at least as far as the bearings for the quill shaft hubs (12, 13) and the planet gear bearings (21).

8. Transmission in accordance with Claim 1,
**characterized** in that,
- the lower portion of the spur gear (3) is surrounded by its own close-fitting oil sump (40) which reaches approximately to the centre of the output shaft (6),
- at least one ring gear carrier web (10) with several axial bores (41) is provided.

9. Transmission in accordance with Claim 1,
**characterized** in that, the bearing (22) of the ring gear hub (12) which faces the clutch (45) and is opposite the housing (1) is a ball bearing (22), and the bearing (23) of the ring gear hub (12) which faces away from the clutch (45) and is opposite the housing (1) is a roller bearing (23).

10. Transmission in accordance with Claim 1,
**characterized** in that,
- a control system for actuating the clutch (45) is provided
- which only permits the clutch (45) to be changed over when the vehicle is stationary,
- and which only permits the clutch (45) to be changed over when the vehicle is operating in a low gear or given a specified engine power reduction.

## Revendications

1. Boîte de vitesses, surtout pour engins de chantier, avec un arbre de sortie (6) logé dans des parois opposées du carter et relié pour entraînement à un pignon (2) sur un arbre intermédiaire situé en amont par un seul pignon droit à denture extérieure (3), sachant que:
- le pignon droit (3) présente, outre sa denture extérieure (42), une denture intérieure (43),
- dans laquelle engrènent des satellites (19), lesquels engrènent aussi bien avec le pignon droit (3) qu'avec un planétaire (44),
- et qu'un arbre creux (17) portant le planétaire (44)
est reliable par un embrayage (45) avec le carter (1) dans une première position de commutation (45) et, dans une deuxième position de commutation, avec un porte-satellites (46) des satellites (19),
- sachant que le porte-satellites (46) est relié à l'arbre de sortie (6) de façon solidaire en rotation,
**caractérisée** en ce que
- l'arbre de sortie (6) présente un embrayage de coupure (31) formant un prolongement d'arbre (35) présentant un tourillon de guidage dans le sens axial avant un moyeu à flasque (15) emmmanché sur cet arbre de sortie de façon à en être solidaire en rotation,
- qui est enfiché dans un alésage de roulement intérieur afférent (34) de l'arbre de sortie (6) avec le tourillon de guidage,
- et sachant que l'embrayage de coupure (31) est composé respectivement d'une denture d'entraînement de même taille sur les extrémités libres de l'arbre de sortie (6) et du prolongement d'arbre (35) ainsi que d'un manchon baladeur (33) pouvant être déplacé dans le sens axial sur ces dentures d'entraînement,
- sachant que le prolongement d'arbre (35) est guidé par un propre roulement (7), qui est maintenu dans un couvercle latéral du carter (5) dépassant de l'embrayage de coupure (31) dans le sens axial,
- dont l'embase de bride constitue la fixation axiale extérieure d'une bague extérieure d'un roulement de moyeu de couronne (23) afférent.

2. Boîte de vitesses selon la revendication 1,
**caractérisée** en ce que
- l'embrayage (45) est un embrayage à crabots avec un manchon baladeur (25),
- dont la denture d'entraînement agit de façon combinée avec une denture d'embrayage (27) sur un collet de carter (26) et avec une denture d'embrayage (18) sur l'arbre creux du planétaire (17), et
- en ce que le manchon baladeur (25) prend une position neutre entre les deux positions de commutation.

3. Boîte de vitesses selon la revendication 1,
**caractérisée** en ce que
- l'arbre de sortie (6) est installé dans les logements de roulements (4, 5),
- qui sont reliés de façon amovible avec le carter (1) et recouvrent des ouvertures du carter (1) dont au moins une permet le montage de l'arbre de sortie (6) prémonté.

4. Boîte de vitesses selon la revendication 3,
**caractérisée** en ce que l'embrayage (45) est installé dans l'un des deux logements de roulements (4, 5).

5. Boîte de vitesses selon la revendication 1,
**caractérisée** en ce que l'arbre creux du planétaire (17) est fixé dans le sens axial sur l'arbre de sortie (6) par des rondelles de butée (28) face à la bride (14) opposée à l'embrayage fixé sur l'arbre de sortie (6) et face à une embase annulaire (29) placée dans le sens axial en avant de l'une des dentures d'embrayage (18).

6. Boîte de vitesses selon la revendication 1,
**caractérisée** en ce que l'arbre creux de planétaire (17) est appuyé à son extrémité libre par un roulement à aiguilles (20) contre l'arbre de sortie (6).

7. Boîte de vitesses selon la revendication 1,
**caractérisée** en ce que
- l'arbre de sortie (6) présente un perçage central (39) raccordé à un système d'alimentation en huile sous pression,
- à partir duquel des canaux radiaux conduisent au moins aux roulements des moyeux de couronne (12, 13) et aux roulement de satellites (21).

8. Boîte de vitesses selon la revendication 1,
**caractérisée** en ce que
- la zone inférieure du pignon droit (3) est étroitement entourée d'un propre bac à huile (40) allant approximativement jusqu'au milieu de l'arbre de sortie (6) et
- en ce qu'au moins un porte-couronne (10) est muni de plusieurs perçages axiaux (41).

9. Boîte de vitesses selon la revendication 1,
**caractérisée** en ce que le roulement (22) dirigé vers l'embrayage (45) du moyeu de la couronne (12) en face du carter (1) est un roulement à billes (22) et que le roulement opposé à l'embrayage (45) du moyeu de la couronne (13) en face du carter (1) est un roulement à rouleaux.

10. Boîte de vitesses selon la revendication 1,
**caractérisée** en ce
- qu'il y a un système de pilotage pour la commande de l'embrayage (45),
- qui ne permet la commutation de ce dernier que lorsque le véhicule est immobilisé
- et qui ne permet cette commutation que dans les vitesses inférieures de la boîte de vitesses du véhicule, voire pour un étranglement donné du moteur.
